# EUROPEAN PATENT APPLICATION

(11) **EP 1 478 127 A1**
(43) Date of publication of application: **17.11.2004**
(21) Application number: 03705059.8
(22) Date of filing: 12.02.2003
(51) Int. Cl.: H04L 12/28

(54) **DATA COMMUNICATION SYSTEM, DATA COMMUNICATION MANAGEMENT DEVICE AND METHOD, AND COMPUTER PROGRAM**

(30) Priority: 18.02.2002 JP 2002040076
(71) Applicant: Sony Corporation, Tokyo 141-0001 (JP)
(72) Inventor: KYUSOJIN, Hiroshi, Sony Corporation, Tokyo 141-0001 (JP); FURUKAWA, Minoru, Sony Corporation, Tokyo 141-0001 (JP); ENAMI, Tsugutomo, Sony Corporation, Tokyo 141-0001 (JP); MIWA, Yasutaka, Sony Corporation, Tokyo 141-0001 (JP); GIOR, Kevin, Sony Corporation, Tokyo 141-0001 (JP)
(74) Representative: DeVile, Jonathan Mark, Dr.
(86) International application number: PCT/JP2003/001410
(87) International publication number: WO 2003/069850

(57) **Abstract**

An apparatus and a method for performing data transfer that can ensure QoS of data transmitted and received are provided. IEEE802.1p priority tags as priority identifiers are set under control of a tag managing terminal. A priority tag is set for a data flow to be subjected to priority processing, for example, to be guaranteed QoS so as to prevent duplicate use of a queue in a communication control apparatus such as a switch or the like connected to a network. The tag managing terminal for example converts a queue use state in intra-subnetwork communication into a table, and retains the table. In response to a queue request from each terminal, the tag managing terminal refers to the table and then assigns a tag. The communication control apparatus such as the switch or the like that executes data transfer control prevents duplicate queue generation for data flows to be subjected to priority processing only by processing using the priority table associating tags with queues.

## Description

### TECHNICAL FIELD

The present invention relates to a data communication system, an apparatus and a method for data communication control, and a computer program, and particularly to a data communication system, an apparatus and a method for data communication control, and a computer program that execute improved flow control at interconnected network apparatus in IEEE802.3.

### BACKGROUND ART

Recently, data transfer via various communication networks has been actively performed. Various information processing apparatus and communication apparatus such as PCs, workstations, PDAs, portable terminals and the like are connected to each other via networks for data communication. As a protocol for interconnecting these various communication apparatus and performing communication processing, there is a TCP/IP protocol, for example. The TCP/IP protocol allows a position of a communication terminal on a network to be identified using an IP address, which is a logical address. Further, a MAC address (Ethernet address) for identifying each information processing apparatus or communication terminal itself ensures uniqueness of each information processing apparatus within a network, thus enabling communication of data packets (or frames) between terminals via the network.

The MAC address is formed by a total of six bytes including three bytes assigned to a hardware manufacturer and three bytes assigned to each apparatus. The MAC address is managed by the IEEE (The Institute of Electrical and Electronics Engineers, Inc.), and is set as an address unique to each apparatus.

There has recently been a desire for a high value added type network such as provides QoS (Quality of Service) that guarantees quality of data transferred on a network or CoS (Class of Service). Realizing real time reproduction in moving picture distribution, for example, requires transmission of packets constituting a moving picture to a destination apparatus without delay. On the other hand, some data packets tolerate a temporal delay. Thus, in packet processing on a network, it has become necessary to determine processing priority of each packet and then perform the processing.

One processing apparatus for providing QoS, that is, ensuring quality of data transfer in a unit of data flow, that is, a unit of data flow identified by a transmission source address and a transmission destination address is a data transfer control apparatus such as a router, a switch or the like connected on a network.

In providing QoS in a flow unit, such a data transfer control apparatus, that is, a network apparatus such as a router, a switch or the like generally not only checks a transmitter address/receiver address of an IP packet but also checks a port number included in TCP or UDP header information, thereby determines which packet belongs to which flow, and executes priority control processing according to the flow identified by the port number.

However, the IP packet may be fragmented, that is, divided into a plurality of packets, and it is not necessarily true that all the divided packets include the TCP or UDP port number. Therefore it is not easy to identify a data flow by checking a TCP or UDP port number.

Furthermore, since an IP header has a variable length, each packet may have a different number of bytes included from a head of the packet to a TCP or UDP port number. Thus, even in the case of a switch that executes control in a layer 2 (data link layer) in an ISO reference model, identifying a data flow by checking a TCP or UDP port number requires reconstruction of a data frame of a layer 3 (network layer, IP layer) and a layer 4 (transport layer, TCP/UDP layer). Therefore providing QoS in a flow unit requires a large amount of calculation.

Thus, data transfer control based on a port number as TCP or UDP header information increases a time required for processing and causes a delay in data transfer instead, thus making real time reproduction difficult, for example. Therefore QoS provision is made difficult.

### DISCLOSURE OF INVENTION

The present invention has been made in view of the above problems, and it is accordingly an object of the present invention to provide a data communication system, an apparatus and a method for data communication control, and a computer program that make it possible to efficiently execute data transfer control in flow units according to priority at a data transfer control apparatus such as a switch, a router, a hub or the like connected on a network by setting a tag managing terminal for performing priority tag assignment processing.

According to a first aspect of the present invention, there is provided a data communication system for executing data communication control via a network, the data communication system including: a tag managing terminal apparatus for assigning a priority tag as information to be added to a data frame in response to a tag assignment request from a data transmission source terminal; a data transmission terminal for transmitting the data frame in which the priority tag assigned by the tag managing terminal apparatus is set as the information added to the data frame; and a data communication control apparatus for identifying a data flow on a basis of the priority tag as the information added to the data frame received from the data transmission source terminal, storing the data frame in a queue selected in correspondence with the identified data flow, and outputting the data frame stored in the queue according to a predetermined schedule.

Further, in one embodiment of the data communication system according to the present invention, the tag managing terminal apparatus has a queue use state table that associates a data communication destination node identifier, a data transmission source node identifier, and a queue identifier in the data communication control apparatus with each other, and which enables determination of a state of use of queues in the data communication control apparatus within the managed network; and in response to the request from the data transmission source terminal, the tag managing terminal apparatus refers to the queue use state table, and sets a priority tag corresponding to a queue different from a used queue as the assigned tag.

Further, in one embodiment of the data communication system according to the present invention, the tag managing terminal apparatus has priority table information associating priority tags with output queues, the priority table information being retained by the communication control apparatus within the managed network; and the tag managing terminal apparatus extracts a priority tag that can be set in correspondence with a queue selected in the queue use state table on a basis of a priority table, and sets the extracted priority tag as the assigned tag.

Further, in one embodiment of the data communication system according to the present invention, the tag assignment request from the data transmission source terminal includes a data communication destination node identifier and a data transmission source node identifier; and on a basis of the data communication destination node identifier and the data transmission source node identifier included in the tag assignment request, the tag managing terminal apparatus refers to the queue use state table, and sets a priority tag corresponding to a queue different from a used queue as the assigned tag.

Further, in one embodiment of the data communication system according to the present invention, the data frame transmitted by the data transmission source terminal is a data frame defined in IEEE802.3; and the data communication control apparatus identifies the data flow on a basis of a priority tag stored in the IEEE802.3 data frame.

Further, according to a second aspect of the present invention, there is provided a data communication managing apparatus for executing data communication control processing via a network, wherein a priority tag as information to be added to a data frame is assigned in response to a tag assignment request from a data transmission source terminal.

Further, in one embodiment of the data communication managing apparatus according to the present invention, the data communication managing apparatus has a queue use state table that associates with each other a data communication destination node identifier, a data transmission source node identifier, and a queue identifier in a data communication control apparatus for executing data transfer control within the network, and which enables determination of a state of use of queues in the data communication control apparatus within the managed network; and in response to the request from the data transmission source terminal, the data communication managing apparatus refers to the queue use state table, and sets a priority tag corresponding to a queue different from a used queue as the assigned tag.

Further, in one embodiment of the data 6communication managing apparatus according to the present invention, the data communication managing apparatus has priority table information associating priority tags with output queues, the priority table information being retained by the communication control apparatus within the managed network; and the data communication managing apparatus extracts a priority tag that can be set in correspondence with a queue selected in the queue use state table on a basis of a priority table, and sets the extracted priority tag as the assigned tag.

Further, in one embodiment of the data communication managing apparatus according to the present invention, on a basis of a data communication destination node identifier and a data transmission source node identifier included in the tag assignment request, the data communication managing apparatus refers to the queue use state table, and sets a priority tag corresponding to a queue different from a used queue as the assigned tag.

Further, in one embodiment of the data communication managing apparatus according to the present invention, the data frame transmitted by the data transmission source terminal is a data frame defined in IEEE802.3; and the data communication managing apparatus sets a priority tag to be set in the IEEE802.3 data frame as the assigned tag.

Further, according to a third aspect of the present invention, there is provided a data communication control method for executing data communication control via a network, the data communication control method including: a tag assigning step in a tag managing terminal apparatus for assigning a priority tag as information to be added to a data frame in response to a tag assignment request from a data transmission source terminal; a data transmitting step in a data transmission source terminal for transmitting the data frame in which the priority tag assigned in the tag assigning step is set as the information added to the data frame; and a data communication control step in a data communication control apparatus for identifying a data flow on a basis of the priority tag as the information added to the data frame received from the data transmission source terminal, storing the data frame in a queue selected in correspondence with the identified data flow, and outputting the data frame stored in the queue according to a predetermined schedule.

Further, in one embodiment of the data communication control method according to the present invention, on a basis of a queue use state table that associates a data communication destination node identifier, a data transmission source node identifier, and a queue identifier in the data communication control apparatus with each other, and which enables determination of a state of use of queues in the data communication control apparatus within the managed network, the tag assigning step in the tag managing terminal apparatus sets a priority tag corresponding to a queue different from a used queue as the assigned tag in response to the request from the data transmission source terminal.

Further, in one embodiment of the data communication control method according to the present invention, on a basis of priority table information associating priority tags with output queues, the priority table information being retained by the communication control apparatus within the managed network, the tag assigning step in the tag managing terminal apparatus extracts a priority tag that can be set in correspondence with a queue selected in the queue use state table, and sets the extracted priority tag as the assigned tag.

Further, in one embodiment of the data communication control method according to the present invention, the tag assignment request from the data transmission source terminal includes a data communication destination node identifier and a data transmission source node identifier; and on a basis of the data communication destination node identifier and the data transmission source node identifier included in the tag assignment request, the tag assigning step in the tag managing terminal apparatus refers to the queue use state table, and sets a priority tag corresponding to a queue different from a used queue as the assigned tag.

Further, in one embodiment of the data communication control method according to the present invention, the data frame transmitted by the data transmission source terminal is a data frame defined in IEEE802.3; and the data communication control step in the data communication control apparatus identifies the data flow on a basis of a priority tag stored in the IEEE802.3 data frame.

Further, according to a fourth aspect of the present invention, there is provided a data communication managing method for executing data communication control processing via a network, the data communication managing method characterized in that a tag assigning process for assigning a priority tag as information to be added to a data frame is performed in response to a tag assignment request from a data transmission source terminal.

Further, in one embodiment of the data communication managing method according to the present invention, referring to a queue use state table that associates with each other a data communication destination node identifier, a data transmission source node identifier, and a queue identifier in a data communication control apparatus for executing data transfer control within the network, and which enables determination of a state of use of queues in the data communication control apparatus within the managed network, the tag assigning process sets a priority tag corresponding to a queue different from a used queue as the assigned tag in response to the request from the data transmission source terminal.

Further, in one embodiment of the data communication managing method according to the present invention, referring to priority table information associating priority tags with output queues, the priority table information being retained by the communication control apparatus within the managed network, the tag assigning process extracts a priority tag that can be set in correspondence with a queue selected in the queue use state table, and sets the extracted priority tag as the assigned tag.

Further, in one embodiment of the data communication managing method according to the present invention, on a basis of a data communication destination node identifier and a data transmission source node identifier included in the tag assignment request, the tag assigning process refers to the queue use state table, and sets a priority tag corresponding to a queue different from a used queue as the assigned tag.

Further, in one embodiment of the data communication managing method according to the present invention, the tag assigning process sets a priority tag to be set in an IEEE802.3 data frame as the assigned tag.

Further, according to a fifth aspect of the present invention, there is provided a computer program as a program for executing data communication control processing via a network, the computer program including: a step for receiving a tag assignment request from a data transmission source terminal; a step for referring to a queue use state table that associates with each other a data communication destination node identifier, a data transmission source node identifier, and a queue identifier in a data communication control apparatus for executing data transfer control within the network; and a step for setting a priority tag corresponding to a queue different from a used queue as an assigned tag on a basis of data stored in the queue use state table.

The computer program according to the present invention can be provided in a computer readable form to a general-purpose computer system capable of executing various program codes, for example, by a storage medium or a communication medium, for example a CD, an FD, an MO or another storage medium, or a network or another communication medium. By providing such a program in a computer readable form, processing in accordance with the program is realized on the computer system.

Other and further objects, features, and advantages of the present invention will become apparent from more detailed description on the basis of an embodiment of the present invention and accompanying drawings to be described later. It is to be noted that a system in the present specification is a logical set configuration of a plurality of apparatus, and that each component apparatus is not necessarily within an identical housing.

### BRIEF DESCRIPTION OF DRAWINGS

FIG. 1 is a diagram showing a system configuration of a data communication control apparatus (switch);
FIG. 2 is a diagram showing an example of network configuration in which a data communication control system according to the present invention operates;
FIG. 3 is a diagram of assistance in explaining examples of structure of IEEE802.1p data frames to be controlled in the data communication control system according to the present invention;
FIG. 4 is a diagram showing an example of structure of a MAC table;
FIG. 5 is a diagram showing an example of structure of a priority table;
FIG. 6 is a diagram showing an example of configuration of a transfer queue;
FIG. 7 is a flowchart of assistance in explaining a data communication control procedure in a data communication control apparatus;
FIG. 8 is a diagram showing an example of communication processing in the network configuration in which the data communication control system according to the present invention operates;
FIG. 9 is a diagram showing an example of communication processing in the network configuration in which the data communication control system according to the present invention operates;
FIG. 10 is a diagram of assistance in explaining information retained by a tag managing terminal;
FIG. 11 is a flowchart of assistance in explaining processing of a terminal that makes a tag assignment request;
FIG. 12 is a flowchart of assistance in explaining processing of the tag managing terminal that performs tag assignment processing;
FIG. 13 is a diagram showing an example of a queue use state table retained by the tag managing terminal that performs tag assignment processing;
FIG. 14 is a diagram showing an example of communication processing in the network configuration in which the data communication control system according to the present invention operates;
FIG. 15 is a diagram showing an example of a queue use state table retained by the tag managing terminal that performs tag assignment processing;
FIG. 16 is a diagram showing an example of communication processing in the network configuration in which the data communication control system according to the present invention operates; and
FIG. 17 is a diagram showing a configuration of a transfer queue in a data communication control apparatus.

### BEST MODE FOR CARRYING OUT THE INVENTION

A configuration of the present invention will hereinafter be described with reference to the drawings.

### [Processing in IEEE802.1p]

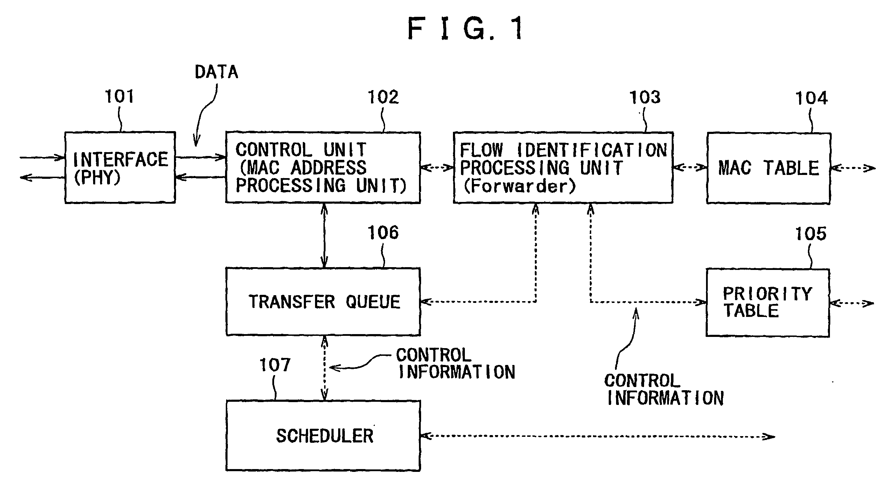

Description will first be made of a common method for implementing IEEE802.1p as a communication standard to which the communication control configuration of the present invention is applied. FIG. 1 is a block diagram of a data transfer control apparatus connected to a network in compliance with IEEE802.1p.

A procedure for data transfer control in the data transfer control apparatus shown in FIG. 1 is performed according to a processing procedure from (1) to (6) to be described below.
(1) A data frame (or a data packet) received by an interface (PHY) 101 is sent to a control unit (MAC address processing unit) 102.
(2) The control unit (MAC address processing unit) 102 extracts header information from the received data frame, and then sends the data frame to a flow identification processing unit (Forwarder) 103.
(3) The flow identification processing unit (Forwarder) 103 determines a network interface for an output destination and an input queue on the basis of values in a MAC table 104 and a priority table 105, and then sends the result to the control unit (MAC address processing unit) 102.
(4) The control unit (MAC address processing unit) 102 stores (enqueues) the received data frame in a specified queue in a transfer queue 106 according to the determined information of the flow identification processing unit (Forwarder) 103.
(5) A transmission queue is determined according to an IEEE802.1p priority tag or a specified parameter value of a scheduler 107 set in advance, the data frame is extracted from the selected queue, and then the data frame is sent from the transfer queue 106 to the control unit (MAC address processing unit) 102.
(6) The control unit (MAC address processing unit) 102 sends the data frame to the interface (PHY) 101.

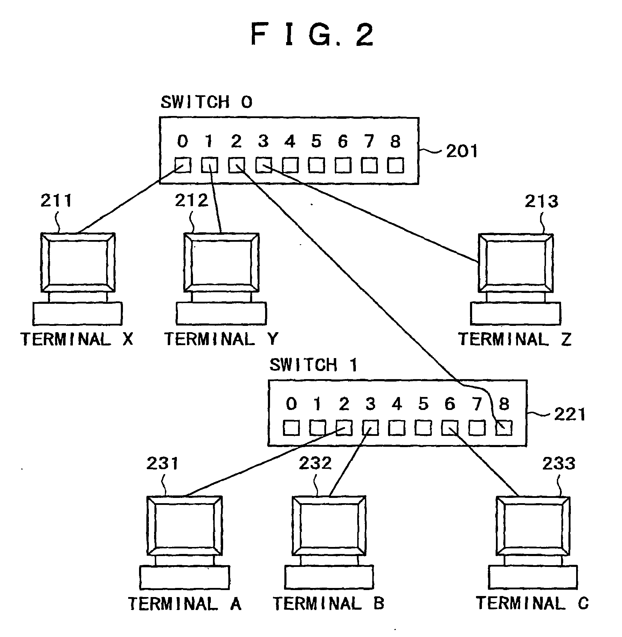

FIG. 2 shows an example of configuration of a network having switches as the data transfer control apparatus performing the above-described processing procedure.

In the network configuration of FIG. 2, a terminal X 211, a terminal Y 212, and a terminal Z 213 as communication terminal apparatus are connected to ports of a switch 0, 201 as a data communication control apparatus, and a terminal A 231, a terminal B 232, and a terminal C 233 as a plurality of communication terminal apparatus are connected to ports of a switch 1, 221 connected to a port of the switch 0, 201. The terminals are connected to each other via the switches to communicate with each other.

The switch 0, 201 and the switch 1, 221 have the above-described configuration of FIG. 1, and control transfer of data frames transmitted and received between the terminals.

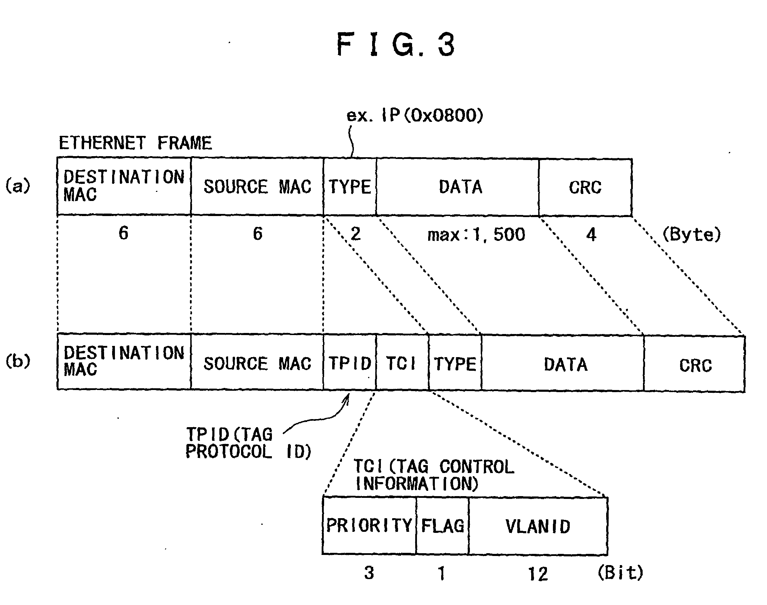

FIG. 3 shows structures of a data frame transmitted and received between the terminals. FIG. 3(a) shows the structure of an Ethernet data frame without a priority tag. FIG. 3(b) shows the structure of an Ethernet data frame having a priority tag. Ethernet data frames having a priority tag shown in FIG. 3(b) are applied in data communication control according to the present invention.

The Ethernet data frame shown in FIG. 3(a) has a destination MAC address (six bytes) as an apparatus-unique address corresponding to an apparatus at a data transmission destination, a source MAC address (six bytes) as an address unique to an apparatus as a data transmission source, a type field (two bytes) for recording for example a type of processing of data stored in the data frame, a data field (a maximum of 1500 bytes) for storing data, a message or the like of an upper layer, and a CRC (four bytes) as a redundant code.

The Ethernet data frame shown in FIG. 3(b) has a tag protocol ID (TPID) as an identifier of a tag protocol and tag control information (TCI) in addition to the above-mentioned fields. The tag control information has a priority (three bits) as priority information, a flag (one bit) indicating whether or not routing control information (E-RIF: Embedded Routing Information Field) is included within a tag header, and an identifier (VLANID) (12 bits) of a virtually constructed LAN (Virtual LAN).

The priority (three bits) as priority information is three-bit information that can be set arbitrarily by a data frame transmission source. Eight priorities 0 [000] to 7 [111] can be set.

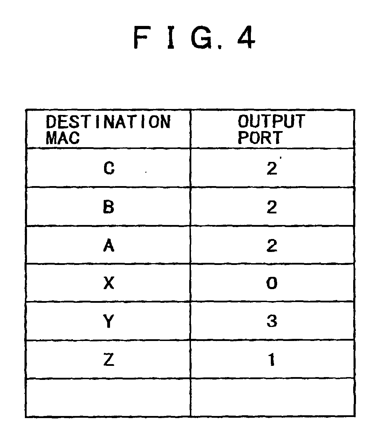

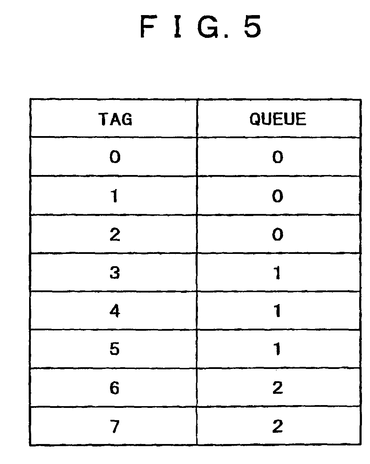

The switch 0, 201 as a communication control apparatus shown in FIG. 2 has a MAC table shown in FIG. 4 and a priority table shown in FIG. 5, for example. As shown in FIG. 4, the MAC table is applied to determine an output port on the basis of a destination MAC address stored in a data frame, and is thus formed as a table associating destination MAC addresses with output ports.

The priority table is applied to determine an output queue on the basis of a tag stored in a data frame, and is thus formed as a table associating tags with queues, as shown in FIG. 5.

In a general method of generating the MAC table shown in FIG. 4, processing of automatically learning addresses and generating entries to be stored in the table is performed by the communication control apparatus itself, whereby table data generation processing is performed. However, the MAC table may be set in advance by a user.

As indicated in the MAC table shown in FIG. 4, a network interface for an output destination (output port: OutPort) is determined uniquely for a destination MAC address (DstMAC). It is not guaranteed, however, that a destination MAC address is determined uniquely on the basis of an output port. For example, in the case of the network configuration shown in FIG. 2 in which the output port 2 of the switch 0, 201 is connected with the plurality of terminals A to C via the other switch 1, 221, a plurality of destination MACs (A, B, and C) are outputted to one output port. In such a configuration, a network interface for an output destination (output port: OutPort) is determined uniquely for a destination MAC address (DstMAC), while a plurality of destination MAC addresses (DstMACs) are set for an output port.

The priority table shown in FIG. 5 is applied to determine an input queue on the basis of a tag stored in a data frame, and is thus a table associating tags with queues. As described with reference to FIG. 3, an IEEE802.1P Ethernet data frame stores three-bit priority data, which can assume a value of 0 [000] to 7 [111].

It is not necessarily required that a different queue be provided for each priority in the priority table. For example, arbitrary correspondences can be set by assigning a queue 0 to tags 0 to 2, assigning a queue 1 to tags 3 to 5, and assigning a queue 3 to tags 6 and 7 as in the table shown in FIG. 5. The correspondences between the priorities and the queue numbers may be set by fixed values provided in advance, or may be set by a user.

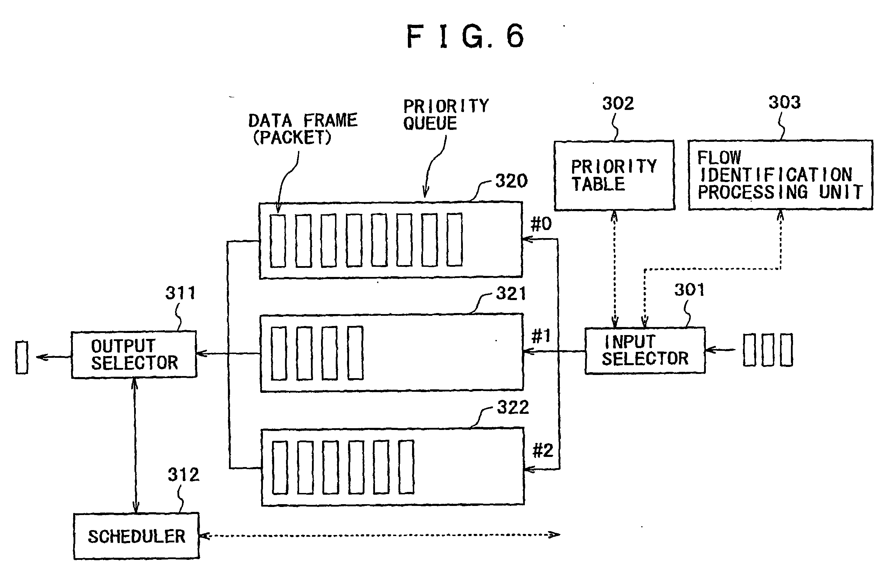

FIG. 6 shows an example of configuration of a transfer queue (corresponding to the transfer queue 106 in FIG. 1) possessed by a switch as a communication control apparatus. In the example of FIG. 6, the transfer queue has three queues, that is, a queue #0, 320, a queue #1, 321, and a queue #2, 322. However, the number of queues can be set arbitrarily.

A data frame is inputted into the transfer queue as processing in which as described earlier with reference to FIG. 1, the flow identification processing unit (Forwarder) 103 determines a network interface for an output destination and an input queue on the basis of values in the MAC table 104 and the priority table 105, and then sends the result to the control unit (MAC address processing unit) 102, and the control unit (MAC address processing unit) 102 stores (enqueues) a received data frame in a specified queue in the transfer queue 106 according to the determined information of the flow identification processing unit (Forwarder) 103.

In FIG. 6, an input selector 301 selects one of the three queues, that is, the queue #0, 320, the queue #1, 321, and the queue #2, 322 into which to input (enqueue) a data frame (packet) with reference to a priority table 302. Incidentally, a flow identification processing unit (Forwarder) 303 may refer to the priority table 302 so that the input selector 301 inputs (enqueues) input packets into queues on the basis of input queue information determined by the flow identification processing unit (Forwarder) 303.

An output selector 311 sends a queue state indicating how many data frames (packets) are in which queue, for example, to a scheduler 312. The scheduler 312 sequentially determines a next output queue according to a preset algorithm, and notifies this to the output selector 311. The output selector 311 extracts a data frame (packet) from the queue specified by the scheduler 312, and then outputs the data frame (packet) via the interface 101 under control of the control unit 102 (see FIG. 1).

Algorithms applicable for selecting an output queue include for example an algorithm that does not select a low-level queue as long as there are packets in a higher-level queue, so that no packet is outputted (dequeued) from the queue #1 as long as there are packets in the queue #2, for example, and an algorithm that specifies an output ratio so that packets are outputted from the queues #2, #1, and #0 at a ratio of 10:5:1, respectively, for example.

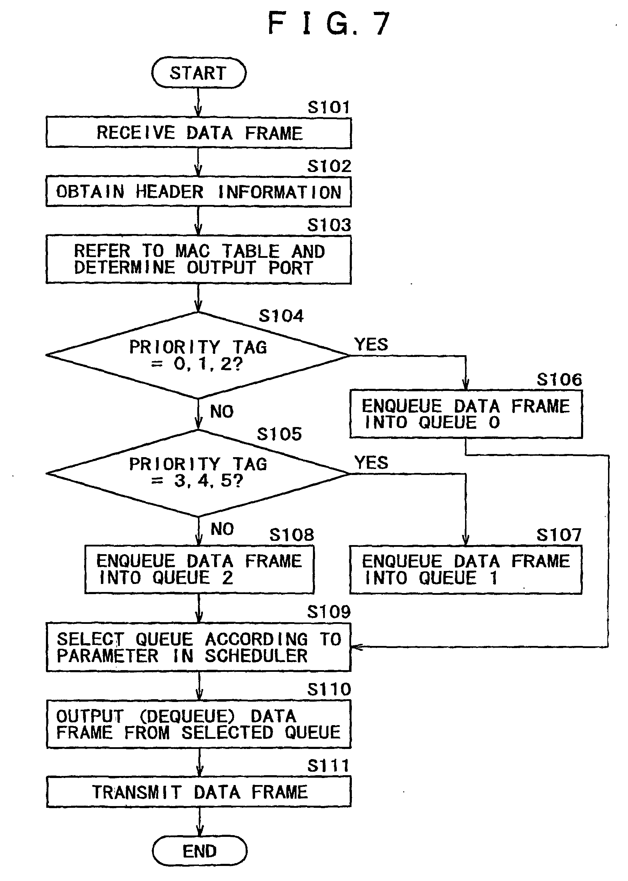

A processing procedure in the switch as the data communication control apparatus will next be described with reference to FIG. 7. Processing in each step will be described.

When an Ethernet data frame is received from each terminal in first step S101, header information within the data frame (see FIG. 3) is obtained in step S102.

In step S103, referring to the MAC table (see FIG. 4), output port information set in correspondence with a destination MAC address obtained from the header information is obtained to determine an output port to be applied to the received data frame.

In step S104 and step S105, a queue is determined from a priority tag in the data frame on the basis of the priority table (see FIG. 5). The example shown in the flowchart is an example of processing in the case of the priority table shown in FIG. 5. When the tag is one of 0, 1, and 2, the processing proceeds to step S106, where the data frame is inputted (enqueued) into the queue 0. When the tag is one of 3, 4, and 5, the processing proceeds to step S107, where the data frame is inputted (enqueued) into the queue 1. When the tag is other than 1 to 5, that is, either 6 or 7, the processing proceeds to step S108, where the data frame is inputted (enqueued) into the queue 2.

Next, in step S109, a queue is selected according to the algorithm preset in the scheduler. In step S110, a data frame is outputted (dequeued) from the selected queue. In step S111, the data frame outputted from the queue is transmitted.

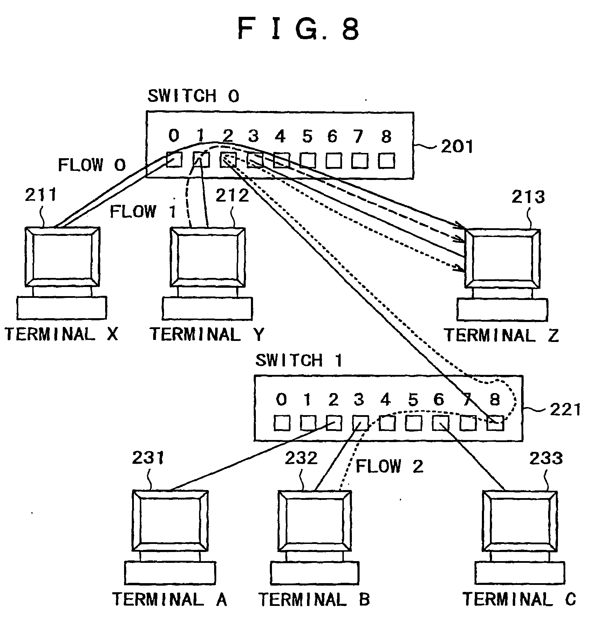

Processing of the switch as the data communication control apparatus will next be described by illustrating an example of data communication processing between terminals in the network configuration shown in FIG. 2. FIG. 8 represents an example of data communication processing between terminals.

Consideration will be given to an environment in which there are three flows, that is, a flow 0, a flow 1, and a flow 2 as data flows between terminals, as shown in FIG. 8.

The flow 0 is a communication from the terminal X 211 to the terminal Z 213.

The flow 1 is a communication from the terminal Y 212 to the terminal Z 213.

The flow 2 is a communication from the terminal B 232 to the terminal Z 213.

When the switch 0, 201 at which the flows meet one another ensures QoS for each flow, performing flow identification based on a port number requires a TCP/IP or UDP/IP header to be checked, as described above. This port number check processing requires reconstruction of a data frame of a layer 3 (network layer, IP layer) and a layer 4 (transport layer, TCP/UDP layer), as described above, thus increasing a processing load and delaying data transfer instead.

### [Concrete Example of Communication Control Processing]

Description will next be made of an example of configuration in which a certain terminal within a network manages use of priority tags.

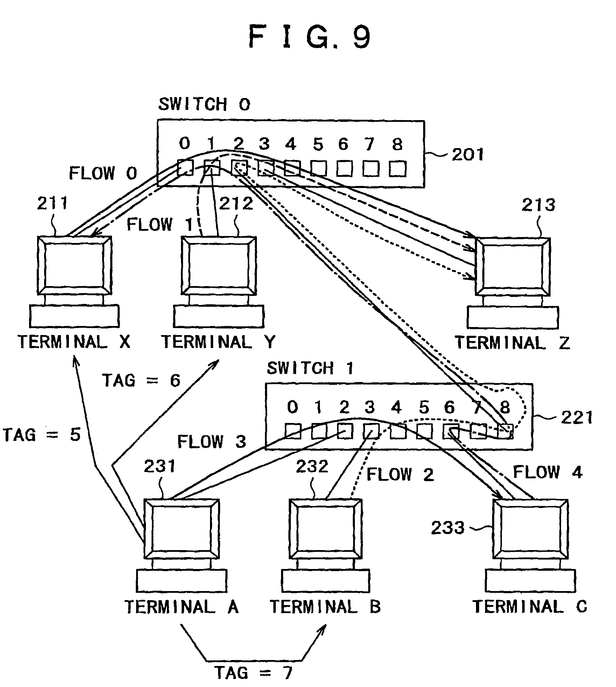

In a network configuration shown in FIG. 9, a terminal X 211, a terminal Y 212, and a terminal Z 213 as communication terminal apparatus are connected to ports of a switch 0, 201 as a data communication control apparatus, and a terminal A 231, a terminal B 232, and a terminal C 233 as a plurality of communication terminal apparatus are connected to ports of a switch 1, 221 connected to a port of the switch 0, 201. The terminals are connected to each other via the switches as communication control apparatus to communicate with each other.

The switch 0, 201 and the switch 1, 221 have the above-described configuration of FIG. 1, and control transfer of data frames transmitted and received between the terminals. Further, the terminal A 231 is set as a tag managing terminal for managing use of tags in data communication within the network.

When the terminal X 211, the terminal Y 212, and the terminal B 232 are to transmit a flow (a flow 0, a flow 1, and a flow 2) that requires QoS control, for example, the terminal X 211, the terminal Y 212, and the terminal B 232 transmit a tag assignment request to the terminal A 231 as the tag managing terminal set as a terminal for performing tag management so that tags that do not conflict with each other are assigned.

Specifically, when a terminal is to transmit a flow requiring QoS control, as steps before a start of data flow transmission processing, the terminal transmits a tag assignment request to the tag managing terminal, receives an assigned tag as a response transmission, sets the assigned tag as a priority tag in tag control information (TCI) of an Ethernet data frame, and then transmits the data frame to a destination.

The tag managing terminal has information on a number of priority queues for each output port possessed by each switch as a data communication control apparatus within a subnetwork and on set correspondences between IEEE802.1p priority tags and queue numbers; that is, the tag managing terminal has priority table information in each switch.

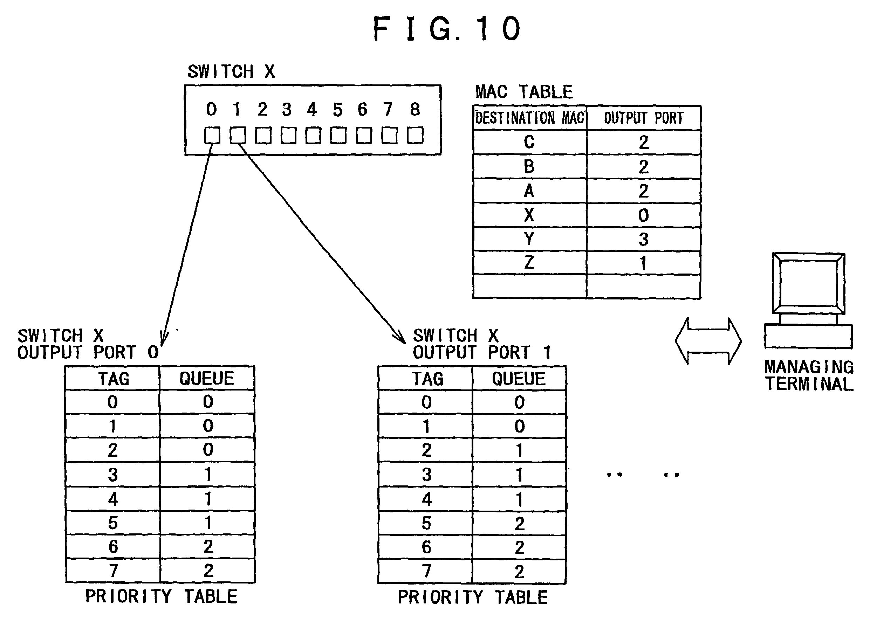

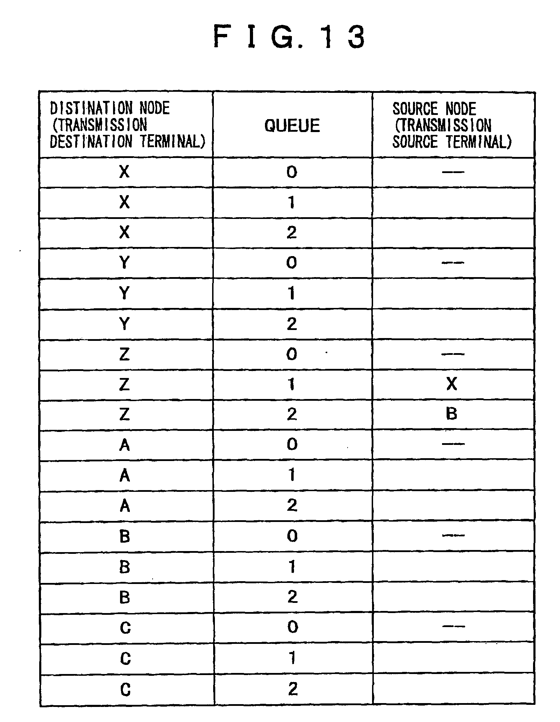

As shown in FIG. 10, for example, the tag managing terminal has a MAC table and priority table information of each switch as a data communication control apparatus within the subnetwork. The tag managing terminal generates a queue use state table (see FIG. 13) to be described later on the basis of these pieces of information, to perform tag assignment processing by determining a state of use of queues. Incidentally, while there is not necessarily a necessity for the tag managing terminal to be present in the subnetwork, the terminal A 231 within the subnetwork is the tag managing terminal in the example of network configuration shown in FIG. 9.

The terminal X 211 and the terminal B 232 issue a tag assignment request to the terminal A 231 as the tag managing terminal before transmitting the flow 0 and the flow 1 requiring priority control, and then are notified of a useable tag.

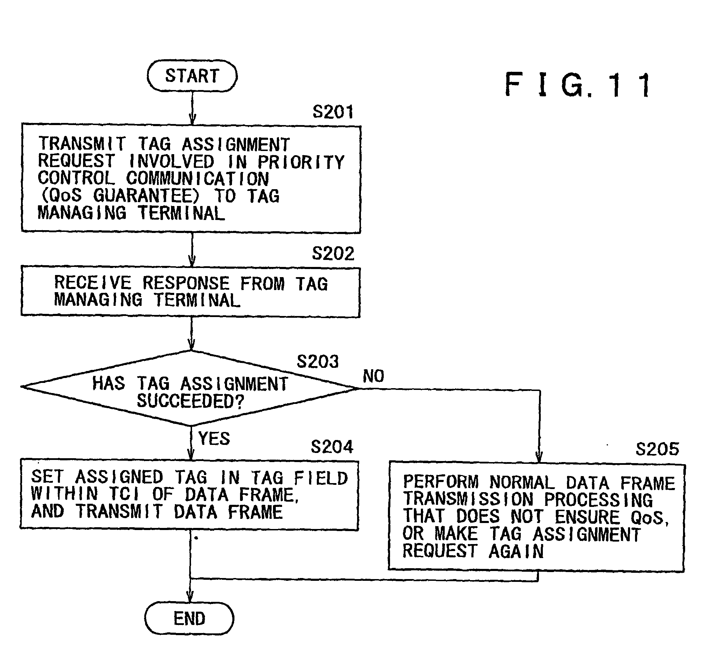

A flow of processing on a terminal side that actually performs communication in this case will be described with reference to a flowchart of FIG. 11.

A terminal that intends to perform priority processing, for example communication processing for a QoS-guaranteed data flow transmits a tag assignment request to the tag managing terminal in step S201. The tag assignment request includes a source node identifier as a terminal identifier of the terminal itself and a destination node identifier as an identifier of a destination terminal to which to transmit a data frame.

In step S202, the terminal receives a response transmission indicating successful assignment or failed assignment from the tag managing terminal. In step S203, the terminal determines whether the response transmission indicates successful tag assignment or failed tag assignment.

When the response transmission indicates successful tag assignment, the terminal sets an assigned tag in a priority tag field in tag control information (TCI) of the transmitting data frame, and then transmits the data frame in step S204. On the other hand, when the determination in step S203 is No, that is, when the terminal receives the response indicating failed tag assignment from the tag managing terminal, the processing proceeds to step S205, where the terminal performs communication with an arbitrarily set tag that does not ensure QoS, or makes the tag assignment request to the tag managing terminal again.

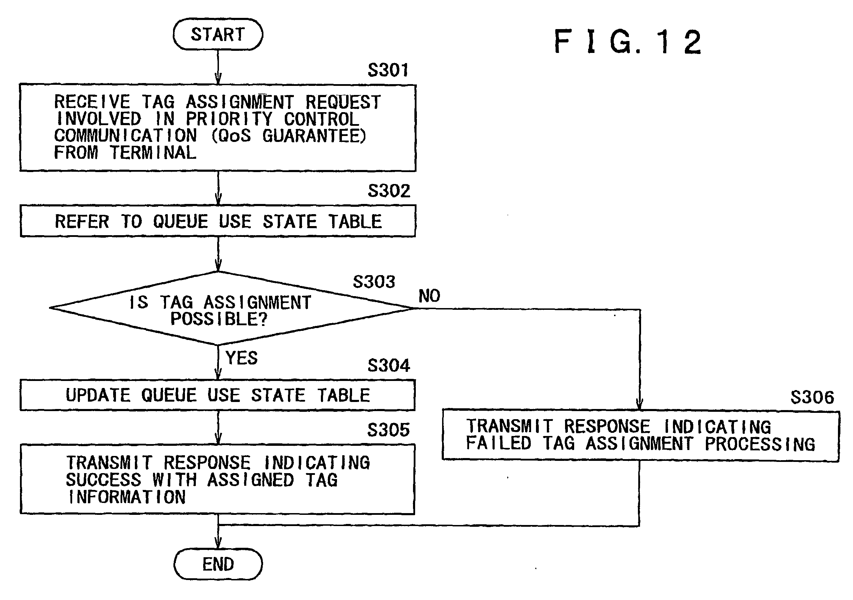

Processing of the tag managing terminal on the other hand will be described with reference to a flowchart of FIG. 12. The tag managing terminal receives a tag assignment request from a terminal that intends to perform QoS-guaranteed data communication in step S301. The tag assignment request includes a source node identifier as a terminal identifier of the terminal that has transmitted the tag assignment request, and a destination node identifier as an identifier of a destination terminal to which to transmit a data frame.

When receiving the tag assignment request, the tag managing terminal refers to a queue use state table stored within the managing terminal in step S302. An example of the queue use state table is shown in FIG. 13. The queue use state table manages a state of use of queues within the subnetwork, for example, managed by the tag managing terminal, and is thus formed as a table associating destination nodes (data transmission destination terminals) and source nodes (data transmission source terminals) performing communication, and used queues with each other as shown in FIG. 13. These are generated on the basis of the MAC table and priority table information of each communication control apparatus (switch), and updated sequentially on the basis of network state monitoring information or tag information assigned by the tag managing terminal itself.

The example of the queue use state table shown in FIG. 13 corresponds to the network configuration shown in FIG. 9, in which there are six terminals in the subnet and there are three queues for each port. Thus there are entries of 6 × 3 = 18 rows. However, since a best effort flow for which priority control is not performed uses 0 as an IEEE802.1p priority tag, a queue [0] causes a possibility of conflict with another flow. Therefore the queue [0] cannot be assigned to a QoS-guaranteed data flow. Thus a queue [1] or a queue [2] is assignable to a QoS-guaranteed data flow.

An output port used for each communication can be uniquely identified by the MAC table described earlier with reference to FIG. 4. The queue use state table shown in FIG. 13 is updated sequentially according to used queues at the identified output port.

When receiving the tag assignment request from the terminal, the tag managing terminal determines whether or not a QoS-ensuring queue can be assigned to an output port applied to communication on the basis of the queue use state table shown in FIG. 13 and information of the source node identifier as the terminal identifier of the terminal that has transmitted the tag assignment request and the destination node identifier as the identifier of the destination terminal to which to transmit a data frame. Specifically, when a QoS-ensuring exclusive queue (for example the queue [1] or [2]) is empty at the output port applied to communication, the tag managing terminal determines that the queue can be set as an exclusive queue for QoS-guaranteed data communication. On the other hand, when the QoS-ensuring exclusive queues are already used, the tag managing terminal determines that the queues cannot be set as an exclusive queue for QoS-guaranteed data communication.

The tag managing terminal assigns an hEEE802.1p priority tag number 5 (corresponding to the queue number [1]) and an IEEE802.1p priority tag number 7 (corresponding to the queue number [2]) to the terminal X, 211 and the terminal B, 232, respectively. The tag managing terminal updates the table accordingly. The correspondences between the queues and the priority tags are determined on the basis of the priority table (see FIG. 5).

That is, the tag managing terminal has priority table information associating priority tags with output queues, which information is retained by a communication control apparatus within the managed network. The tag managing terminal extracts a priority tag that can be set corresponding to a queue selected in the queue use state table on the basis of the priority table, and then sets the extracted priority tag as an assigned tag.

The queue use state table shown in FIG. 13 has table data updated as a result of the assignment of the IEEE802.1p priority tag number 5 (corresponding to the queue number [1]) and the IEEE802.1p priority tag number 7 (corresponding to the queue number [2]) to the terminal X, 211 and the terminal B, 232, respectively. The queue use state table indicates that communication from the terminal X to the terminal Z is being performed using the queue [1] at the output port used for the communication, and that communication from the terminal B to the terminal Z is being performed using the queue [2] at the output port used for the communication.

Thus, when tag assignment is possible (Yes in step S303), the tag managing terminal updates the queue use state table as described above in step S304, and transmits assigned tag information to the terminal that has made the tag assignment request in step S305.

On the other hand, for example in a case where various communications are being performed within the subnetwork, a tag assignment request is made from a terminal, and a QoS-ensuring exclusive queue (for example a queue [1] or [2]) at an output port to be used for the communication is already used for another communication, the tag managing terminal determines that tag assignment is not possible (No in step S303), and proceeds to step S306 to transmit a notification of failed tag assignment processing to the terminal that has made the tag assignment request.

When a terminal that has made a tag assignment request receives a notification of successful tag assignment from the tag managing terminal, the terminal sets an assigned tag in a priority tag field within tag control information (TCI) of a transmitting data frame, and then transmits the data frame, whereby QoS-guaranteed communication is made possible. That is, it is possible to use an exclusive queue in a switch as a communication control apparatus, and thereby perform communication without being affected by other flows.

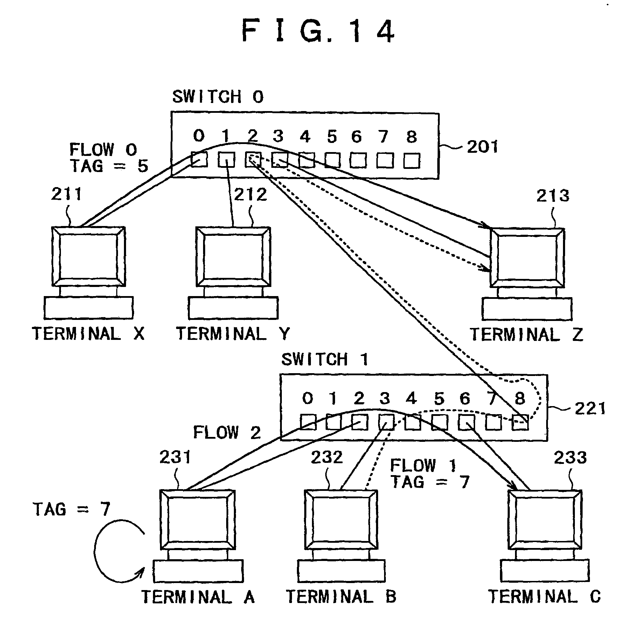

Further, since different IEEE802.1p priority tags can be attached for different receiving terminals, a flow 2 from the terminal A, 231 to the terminal C, 233 as shown in FIG. 14 can be assigned the same IEEE802.1p priority tag number [7] as a flow 1 from the terminal B, 232 to the terminal Z, 213.

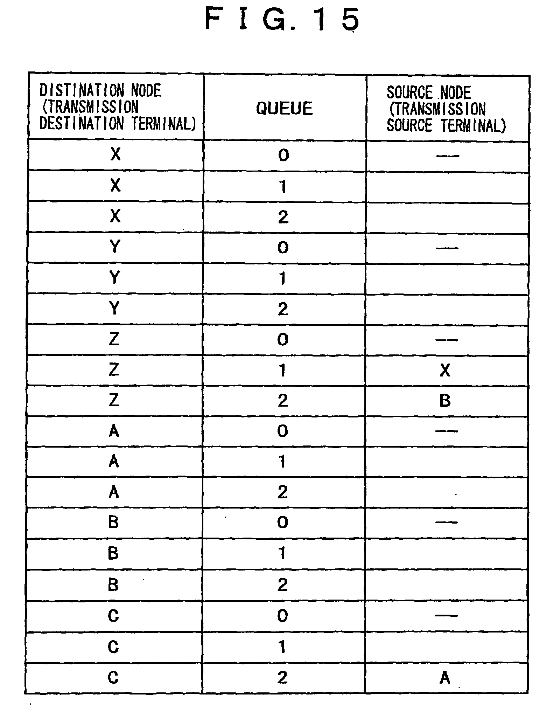

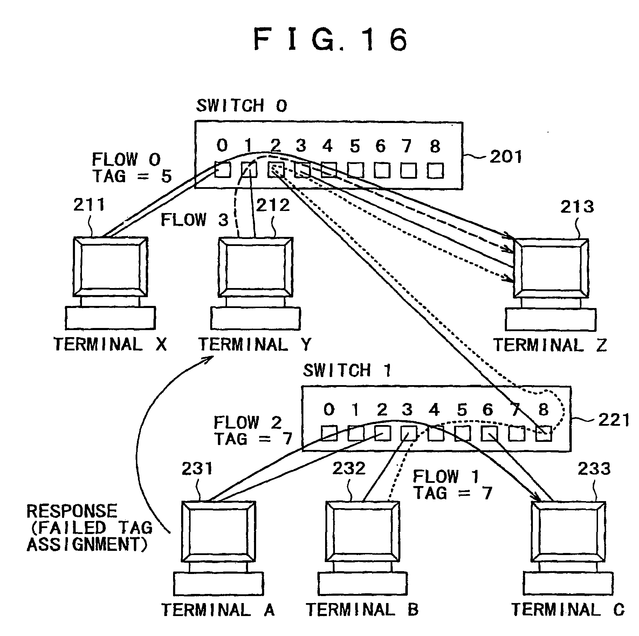

Further, as is the case with the terminal A, 231 shown in this example, the tag assigning terminal itself can be a communication terminal. FIG. 15 shows a queue use state table after this assignment. When a request for a new flow (flow 3) from the terminal Y, 212 to the terminal Z, 213 is made in the network shown in FIG. 16, and a tag assignment request is made from the terminal Y, 212 to the terminal A, 231 as the tag managing terminal, the tag managing terminal refers to the queue use state table, and determines that there is no assignable queue left. The tag assignment thus fails, and a notification of failed tag assignment is transmitted from the terminal A, 231 as the tag managing terminal to the terminal Y, 212.

In this case, the terminal Y, 212 can choose to perform communication of the flow 3 as a normal best effort flow or not to perform the communication when priority control cannot be executed, for example. These choices depend on determination of an application in each terminal or of the terminal.

Thus, tag management at a specific terminal can prevent occurrence of a duplicate tag for a specific output port, and thus prevent concentrated accumulation of data flows in a specific queue of a specific output port in a communication control apparatus such as a switch or the like. It is therefore possible to perform efficient data flow transfer processing and realize QoS-guaranteed data transfer processing. A communication control apparatus such as a switch or the like can eliminate duplicate use of a queue only by enqueuing data flows on the basis of tags set by the tag managing terminal using the priority table associating only tags and queues with each other.

The switch 0, 201 as a data communication control apparatus uses an IEEE802.1p priority tag, which is a priority identifier of an IEEE802.3 (Ethernet) frame, as a flow identifier. That is, the switch as the data communication control apparatus identifies the flow only by checking an Ethernet frame header.

The switch as the data communication control apparatus identifies a plurality of flows on the basis of the three-bit priority tag: 000 to 111 in the tag control information attached to the Ethernet data frame described earlier with reference to FIG. 3.

In a conventional configuration, IEEE802.1p priority tags can be attached freely by respective transmitters, and hence there is a possibility of duplicate use of a queue. In the configuration according to the present invention, however, tags set by the tag managing terminal are used as IEEE802.1p priority tags, so that contention for queues is eliminated and thus QoS-guaranteed data communication is made possible.

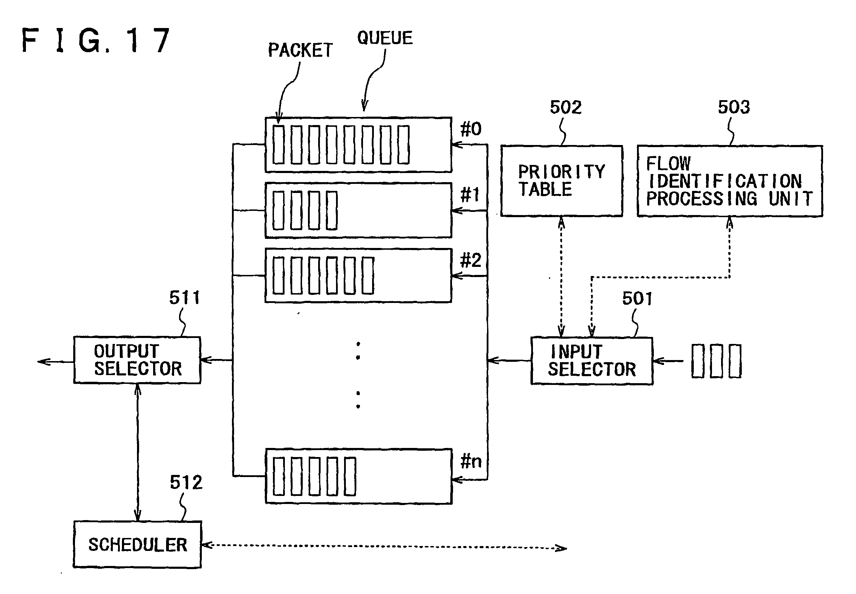

FIG. 17 shows a configuration of a transfer queue formed in a switch as a data communication control apparatus. As shown in FIG. 17, the transfer queue has a plurality of queues #0 to #n set therein which queues correspond to eight priority tags 0 [000] to 7 [111]. The number of queues can be set as an arbitrary number.

An input selector 501 selects one of the plurality of queues: the queues #0 to #n, into which to input (enqueue) a data frame (packet). The input selector 501 inputs (enqueues) the data frame (packet) into the input queue determined on the basis of values of a priority table 502 (see FIG. 5) in which queues are associated with tags. Incidentally, a flow identification processing unit (Forwarder) 503 may refer to the priority table 502 so that the input selector 501 inputs (enqueues) an input packet into each queue on the basis of input queue information determined by the flow identification processing unit (Forwarder) 503.

As described with reference to FIG. 5, the priority table 502 enables an input queue to be uniquely determined on the basis of a tag stored in a data frame of each flow. The input selector 501 determines the tag of the data frame, selects the input queue by referring to the priority table 502, and then inputs (enqueues) the data frame (packet) into the selected queue.

On the other hand, an output selector 511 sends a queue state indicating how many data frames (packets) are in which queue, for example, to a scheduler 512. The scheduler 512 sequentially determines a next output queue according to a preset algorithm, and notifies this to the output selector 511. The output selector 511 extracts a data frame (packet) from the queue specified by the scheduler 512, and then outputs the data frame (packet) via the interface 101 under control of the control unit 102 (see FIG. 1).

The scheduler 512 has, as a parameter, frequency of output of packets from each queue. Algorithms applicable for selecting an output queue include for example an algorithm that does not select a low-level queue as long as there are packets in a higher-level queue, so that no packet is outputted (dequeued) from the queue #1 as long as there are packets in the queue #2, for example, and an algorithm that specifies an output ratio so that packets are outputted from the queues #2, #1, and #0 at a ratio of 10:5:1, respectively, for example.

However, for processing on a queue storing a QoS-providing data flow, that is, a queue storing a data flow to be subjected to priority processing, for example, there are parameters such as "token generation interval", "bucket depth", "token bucket peak rate", "minimum handling size", "maximum datagram size" and the like as shown in RFC 2215 supposing a token bucket algorithm. The scheduler 512 selects a queue to output a packet on the basis of these parameters, and notifies the output selector 511 of the queue. The output selector outputs the packet according to scheduling set by the scheduler 512.

The present invention has been explained above in detail with reference to a specific embodiment. However, it is obvious that those skilled in the art can make modifications and substitutions in the embodiment without departing from the spirit of the present invention. That is, the present invention has been disclosed in a form that is illustrative and is not to be construed as restrictive. In order to understand the spirit of the present invention, a section of claims described at the beginning hereof is to be considered.

It is to be noted that the series of processes described in the specification can be carried out by hardware or software, or a composite configuration of both. When a process is to be carried out by software, the process can be carried out by installing a program having a process sequence recorded therein into a memory within a computer incorporated in special hardware, or installing the program onto a general-purpose personal computer that can perform various functions.

For example, the program can be recorded in advance on a hard disk or in a ROM (Read Only Memory) as a recording medium. Alternatively, the program can be stored (recorded) temporarily or permanently on a removable recording medium such as a flexible disk, a CD-ROM (Compact Disc Read Only Memory), an MO (Magneto optical) disk, a DVD (Digital Versatile Disc), a magnetic disk, a semiconductor memory or the like. Such a removable recording medium can be provided as so-called packaged software.

Incidentally, in addition to being installed from a removable recording medium as described above onto a computer, the program can be transferred from a download site to a computer by radio, or transferred to a computer by wire via a network such as a LAN (Local Area Network), the Internet or the like, so that the computer receives the program thus transferred and then installs the program onto a recording medium such as a built-in hard disk or the like.

It is to be noted that the various processes described in the specification may be not only performed in time series in the described order but also performed in parallel or individually according to processing capability or requirement of an apparatus performing the processes.

### INDUSTRIAL APPLICABILITY

As described above, the data communication system, and the data communication control apparatus and method according to the present invention set an IEEE802.1p priority tag as a priority identifier under control of the tag managing terminal. The priority tag is set for a data flow to be subjected to priority processing, for example, to be guaranteed QoS so as to prevent duplicate use of a queue in a communication control apparatus such as a switch or the like connected to the network. It is therefore possible to process the data flow to be subjected to priority processing without delay.

As described above, the data communication system, and the data communication control apparatus and method according to the present invention set an IEEEB02.1p priority tag as a priority identifier under control of the tag managing terminal. The priority tag is set for a data flow to be subjected to priority processing, for example, to be guaranteed QoS so as to prevent duplicate use of a queue in a communication control apparatus such as a switch or the like connected to the network. The communication control apparatus such as the switch or the like connected to the network which apparatus executes data transfer control can prevent duplicate queue setting for data flows to be subjected to priority processing only by performing processing using a priority table associating tags with queues. It is therefore possible to perform reliable priority processing on the data flows to be subjected to priority processing.

## Claims

1. A data communication system for executing data communication control via a network, comprising:
a tag managing terminal apparatus for assigning a priority tag as information to be added to a data frame in response to a tag assignment request from a data transmission source terminal;
a data transmission terminal for transmitting the data frame in which the priority tag assigned by said tag managing terminal apparatus is set as the information added to the data frame; and
a data communication control apparatus for identifying a data flow on a basis of the priority tag as the information added to the data frame received from said data transmission source terminal, storing the data frame in a queue selected in correspondence with the identified data flow, and outputting the data frame stored in the queue according to a predetermined schedule.

2. The data communication system as claimed in claim 1, wherein
said tag managing terminal apparatus has a queue use state table that associates a data communication destination node identifier, a data transmission source node identifier, and a queue identifier in the data communication control apparatus with each other, and which enables determination of a state of use of queues in the data communication control apparatus within the managed network, and in response to the request from said data transmission source terminal, said tag managing terminal apparatus refers to said queue use state table, and sets a priority tag corresponding to a queue different from a used queue as the assigned tag.

3. The data communication system as claimed in claim 2, wherein
said tag managing terminal apparatus has priority table information associating priority tags with output queues, said priority table information being retained by the communication control apparatus within the managed network, and said tag managing terminal apparatus extracts a priority tag that can be set in correspondence with a queue selected in said queue use state table on a basis of a priority table, and sets the extracted priority tag as the assigned tag.

4. The data communication system as claimed in claim 2, wherein
the tag assignment request from said data transmission source terminal includes a data communication destination node identifier and a data transmission source node identifier; and
on a basis of the data communication destination node identifier and the data transmission source node identifier included in the tag assignment request, said tag managing terminal apparatus refers to said queue use state table, and sets a priority tag corresponding to a queue different from a used queue as the assigned tag.

5. The data communication system as claimed in claim 1, wherein
the data frame transmitted by said data transmission source terminal is a data frame defined in IEEE802.3; and
said data communication control apparatus identifies the data flow on a basis of a priority tag stored in the IEEE802.3 data frame.

6. A data communication managing apparatus for executing data communication control processing via a network,
wherein a priority tag as information to be added to a data frame is assigned in response to a tag assignment request from a data transmission source terminal.

7. The data communication managing apparatus as claimed in claim 6, wherein
said data communication managing apparatus has a queue use state table that associates with each other a data communication destination node identifier, a data transmission source node identifier, and a queue identifier in a data communication control apparatus for executing data transfer control within the network, and which enables determination of a state of use of queues in the data communication control apparatus within the managed network, and in response to the request from said data transmission source terminal, said data communication managing apparatus refers to said queue use state table, and sets a priority tag corresponding to a queue different from a used queue as the assigned tag.

8. The data communication managing apparatus as claimed in claim 7, wherein
said data communication managing apparatus has priority table information associating priority tags with output queues, said priority table information being retained by the communication control apparatus within the managed network, and said data communication managing apparatus extracts a priority tag that can be set in correspondence with a queue selected in said queue use state table on a basis of a priority table, and sets the extracted priority tag as the assigned tag.

9. The data communication managing apparatus as claimed in claim 7, wherein
on a basis of a data communication destination node identifier and a data transmission source node identifier included in the tag assignment request, said data communication managing apparatus refers to said queue use state table, and sets a priority tag corresponding to a queue different from a used queue as the assigned tag.

10. The data communication managing apparatus as claimed in claim 6, wherein
the data frame transmitted by the data transmission source terminal is a data frame defined in IEEE802.3; and
said data communication managing apparatus sets a priority tag to be set in the IEEE802.3 data frame as the assigned tag.

11. A data communication control method for executing data communication control via a network, said data communication control method, comprising:
a tag assigning step in a tag managing terminal apparatus for assigning a priority tag as information to be added to a data frame in response to a tag assignment request from a data transmission source terminal;
a data transmitting step in a data transmission source terminal for transmitting the data frame in which the priority tag assigned in said tag assigning step is set as the information added to the data frame; and
a data communication control step in a data communication control apparatus for identifying a data flow on a basis of the priority tag as the information added to the data frame received from said data transmission source terminal, storing the data frame in a queue selected in correspondence with the identified data flow, and outputting the data frame stored in the queue according to a predetermined schedule.

12. The data communication control method as claimed in claim 11, wherein
on a basis of a queue use state table that associates a data communication destination node identifier, a data transmission source node identifier, and a queue identifier in the data communication control apparatus with each other, and which enables determination of a state of use of queues in the data communication control apparatus within the managed network, the tag assigning step in said tag managing terminal apparatus sets a priority tag corresponding to a queue different from a used queue as the assigned tag in response to the request from said data transmission source terminal.

13. The data communication control method as claimed in claim 12, wherein
on a basis of priority table information associating priority tags with output queues, said priority table information being retained by the communication control apparatus within the managed network, the tag assigning step in said tag managing terminal apparatus extracts a priority tag that can be set in correspondence with a queue selected in said queue use state table, and sets the extracted priority tag as the assigned tag.

14. The data communication control method as claimed in claim 12, wherein
the tag assignment request from the data transmission source terminal includes a data communication destination node identifier and a data transmission source node identifier; and
on a basis of the data communication destination node identifier and the data transmission source node identifier included in the tag assignment request, the tag assigning step in said tag managing terminal apparatus refers to said queue use state table, and sets a priority tag corresponding to a queue different from a used queue as the assigned tag.

15. The data communication control method as claimed in claim 11, wherein
the data frame transmitted by the data transmission source terminal is a data frame defined in IEEE802.3; and
the data communication control step in said data communication control apparatus identifies the data flow on a basis of a priority tag stored in the IEEE802.3 data frame.

16. A data communication managing method for executing data communication control processing via a network, comprising:
a tag assigning process for assigning a priority tag as information to be added to a data frame is performed in response to a tag assignment request from a data transmission source terminal.

17. The data communication managing method as claimed in claim 16, wherein
referring to a queue use state table that associates with each other a data communication destination node identifier, a data transmission source node identifier, and a queue identifier in a data communication control apparatus for executing data transfer control within the network, and which enables determination of a state of use of queues in the data communication control apparatus within the managed network, said tag assigning process sets a priority tag corresponding to a queue different from a used queue as the assigned tag in response to the request from said data transmission source terminal.

18. The data communication managing method as claimed in claim 17, wherein
referring to priority table information associating priority tags with output queues, said priority table information being retained by the communication control apparatus within the managed network, said tag assigning process extracts a priority tag that can be set in correspondence with a queue selected in said queue use state table, and sets the extracted priority tag as the assigned tag.

19. The data communication managing method as claimed in claim 17, wherein
on a basis of a data communication destination node identifier and a data transmission source node identifier included in the tag assignment request, said tag assigning process refers to said queue use state table, and sets a priority tag corresponding to a queue different from a used queue as the assigned tag.

20. The data communication managing method as claimed in claim 16, wherein
said tag assigning process sets a priority tag to be set in an IEEE802.3 data frame as the assigned tag.

21. A computer program as a program for executing data communication control processing via a network, comprising:
a step for receiving a tag assignment request from a data transmission source terminal;
a step for referring to a queue use state table that associates with each other a data communication destination node identifier, a data transmission source node identifier, and a queue identifier in a data communication control apparatus for executing data transfer control within the network; and
a step for setting a priority tag corresponding to a queue different from a used queue as an assigned tag on a basis of data stored in said queue use state table.
